# EUROPEAN PATENT SPECIFICATION

(11) **EP 1 645 052 B1**
(45) Date of publication and mention of the grant of the patent: **09.09.2009**
(21) Application number: 04742180.5
(22) Date of filing: 08.07.2004
(51) Int. Cl.: H04B 7/06

(54) **TRANSMISSION METHOD AND BASE TRANSCEIVER STATION**
ÜBERTRAGUNGSVERFAHREN UND BASIS-SENDEEMPFANGSSTATION
PROCEDE D'EMISSION ET STATION DE BASE D'EMETTEUR-RECEPTEUR

(30) Priority: 10.07.2003 FI 20031053; 07.10.2003 US 679501
(43) Date of publication of application: 12.04.2006
(73) Proprietor: Nokia Corporation, 02150 Espoo (FI)
(72) Inventor: RANTA, Pekka, A., FI-03100 Nummela (FI); JOKINEN, Harri, FI-25370 Pertteli (FI); SÄILY, Mikko, FI-04130 Sipoo (FI); NIEMELÄ, Kari, FI-90650 Oulu (FI)
(74) Representative: Antila, Harri Jukka Tapani
(86) International application number: PCT/FI2004/000437
(87) International publication number: WO 2005/006589

(56) References cited:
- EP-A1- 1 303 059
- WO-A2-95/32558
- OLOFSSON H. ET AL.: 'Transmitter diversity with antenna hopping for wireless communication systems' IEEE 47TH VEHICULAR TECHNOLOGY CONFERENCE vol. 3, 04 May 1997 - 07 May 1997, pages 1743 - 1747, XP002281283
- HEATH R.W. ET AL.: 'Transmit diversity using decision-directed antenna hopping' COMMUNICATION THEORY MINI-CONFERENCE 06 June 1999 - 10 June 1999, pages 141 - 145, XP002281282

## Description

### BACKGROUND OF THE INVENTION:

### Field of the Invention:

The invention relates to a transmission method and a base transceiver station in a cellular telecommunication system.

### Description of the Related Art:

Transmit diversity, especially transmit antenna diversity, is an attractive means of obtaining diversity gain against fading mechanisms, such as Rayleigh fading, of a radio channel in telecommunications systems. An approach for providing diversity gain by way of antenna diversity is an antenna hopping method, which consists of transmitting consecutive information bursts from a base transceiver station by using different antennas. An antenna transmitting the information burst may be selected based on a periodical or pseudorandom antenna hopping sequence, for example. The gain in transmission is achieved provided that the radio channels transmitted from each antenna are exposed to different multi-path fading.

A characteristic of the antenna hopping method arises from discontinuity in the base transceiver station transmission when the transmitting antenna is changed from one to another. The discontinuity poses difficulties when a carrier subjected to the antenna hopping is required to provide correlated time slots, for example, for channel characterization purposes. The problem of discontinuity occurring in such carriers may be solved by leaving out such carriers from the antenna hopping, and by confining the antenna hopping to carriers in which the problem of discontinuity is small compared to the gain obtained with the antenna hopping.

A portion of time slots transferred by a carrier left out from the antenna hopping, however, may be used in information payload transmission, and leaving carriers out from the antenna hopping results in latent radio resources. Therefore, it would be a great benefit to be able to increase the number of carriers to which the antenna hopping may be applied.

WO 95/32558 A2 discloses a method for improving connection quality in a cellular radio system in which a base station communicates with multiple subscriber terminal equipments according to time division principle. An antenna via which a signal intended for the terminal equipments is changed on the time division principle in such manner that the base station sends out transmissions via one antenna at a time for a certain predetermined time period, after which the antenna to be used is changed.

### SUMMARY OF THE INVENTION:

The invention provides a transmission method and a base transceiver station. According to one embodiment of the invention, there is provided a transmission method in a base transceiver station of a cellular telecommunication system. The base transceiver station applies antenna hopping between at least two antenna elements. The method includes steps of transmitting and applying. The transmitting step transmits a carrier carrying a first signal and a second signal, at least a portion of the first signal being subjected to a measurement for adjusting receive characteristics of a mobile station for reception of at least a portion of the second signal. The applying step applies antenna hopping to the carrier such that the at least a portion of the first signal and the at least a portion of the second signal are transmitted during an interval between two consecutive antenna hops between the at least two antenna elements.

According to a second embodiment of the invention, there is provided a base transceiver station of a telecommunication system. The base transceiver station includes a transmitting mechanism and an applying mechanism. The transmitting mechanism transmits a carrier carrying a first signal and a second signal. At least a portion of the first signal is subjected to a measurement for adjusting receive characteristics of a mobile station for reception of at least a portion of the second signal. The applying mechanism applies antenna hopping to the carrier such that the at least a portion of the first signal and the at least a portion of the second signal are transmitted during an interval between two consecutive antenna hops between the at least two antenna elements.

The method and system of the invention provide several advantages. One advantage of the invention is that a carrier otherwise excluded from the antenna hopping may be subjected to antenna hopping, thus improving diversity gain of the channels transmitted using the otherwise excluded carrier. Furthermore, the invention permits the inclusion of the otherwise excluded carrier in the frequency hopping sequence.

### BRIEF DESCRIPTION OF THE DRAWINGS:

In the following, the invention will be described in greater detail with reference to the preferred embodiments and the accompanying drawings, in which

Figure 1 shows an example of a structure of a cellular telecommunication system;

Figure 2 shows an example of a structure of a cellular telecommunication system and a timing chart of an antenna hopping sequence;

Figure 3 shows a first example of a structure of a base transceiver station;

Figure 4 shows a second example of a structure of a base transceiver station;

Figure 5 shows a third example of a structure of a base transceiver station; and

Figure 6 illustrates methodology according to embodiments of the invention.

### DETAILED DESCRIPTION OF THE PREFERRED EMBODIMENTS

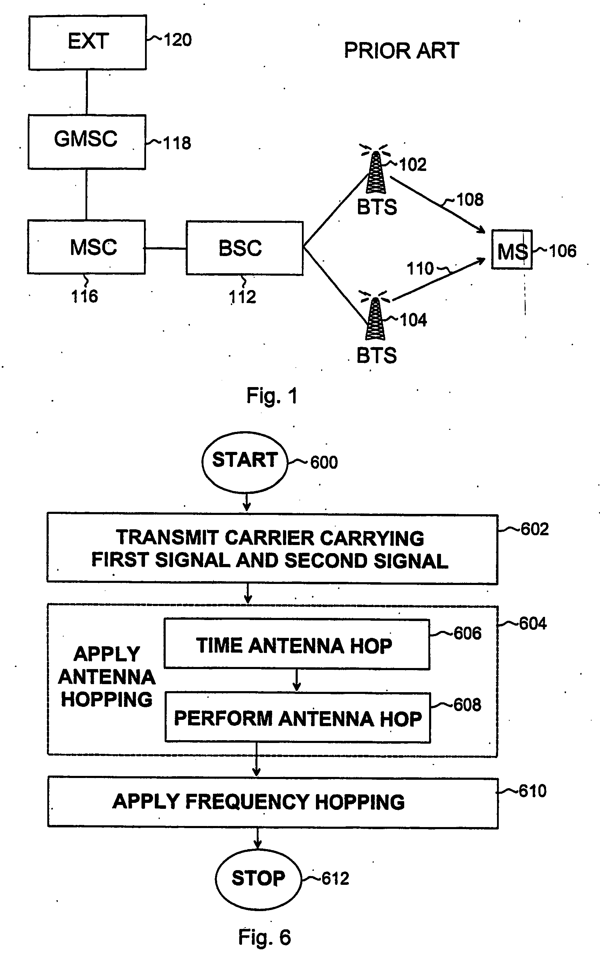

Figure 1 illustrates an example of a simplified structure of a telecommunication system to which the invention may be applied.

The cellular telecommunications system is based on, for example, a GSM (Global System for Mobile Communications) radio access technology or WCDMA (Wideband Code Division Multiple Access) technology. The structure and function of cellular telecommunications systems are known to one skilled in the art, and only network elements relevant to the invention will be described.

In the example shown in Figure 1; the network elements are presented in terms of GSM terminology using circuit-switched network elements without restricting applications of the invention to the GSM system.

The cellular telecommunication system may include a mobile switching center (MSC) 116 enabling circuit-switched signalling in the cellular telecommunications system.

In this embodiment, the cellular telecommunications system may also include a gateway mobile services switching center 118 (GMSC). The gateway mobile services switching center attends to the circuit-switched connections between the core network including the mobile switching center 116 and the gateway mobile services switching center 118, and external networks (EXT) 120, such as a public land mobile network (PLMN) or a public switched telephone network (PSTN).

The mobile switching center 116 controls a radio access network including at least one base station controller (BSC) 112 and a base transceiver station (BTS) 102,104 controlled by the base station controller 112. The base station controller 112 exemplifies a network element, such as a radio network controller (RNC), which acts as an interface between the core network and the radio access network. The base transceiver station 102, 104 may exemplify a network element implementing the radio interface for transferring a signal 108, 110 from the radio access network to the mobile station 106. The invention is not, however, restricted to the presented exemplary structure of the cellular telecommunication system, but can be applied to any cellular telecommunication system.

In this example, the cellular telecommunication system may further include mobile station 106 for providing a user with access to the cellular telecommunication system. The mobile station 106 may include conventional components, including wireless modems, processors with software, memory, a user interface, and a display. The structure and functions of the mobile station 106 are known to one skilled in the art, and thus will not be described in detail.

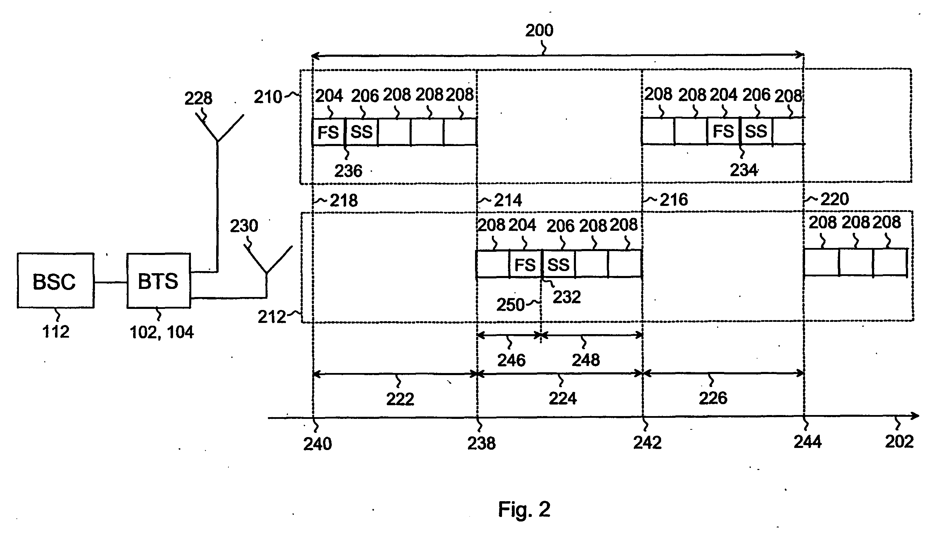

Figure 2 shows an example of a base transceiver station 102, 104 and a timing chart of an antenna hopping sequence 200. The timing of the signals in the timing chart is expressed with respect to a time axis 202 showing time in arbitrary scale.

A carrier carrying a first signal 204 and a second signal 206 is transmitted from the base transceiver station 102, 104. The first signal 204 provides a signal strength reference for the second signal 206 such that when subjected to a measurement in a mobile station 106, the receive characteristics of a mobile station 106 may be adjusted properly for receiving the second signal 206.

In an embodiment of the invention, the carrier carries a third signal 208. The third signal may transfer, for example, user traffic or control signals between the base transceiver station 102,104 and the mobile station 106.

The initiation of the measurement of the first signal may be based on, for example, a priori knowledge on a relative position of the second signal 206 and the first signal 204, and an indication of the arrival of the second signal 206 to the mobile station 106. The arrival of the second signal 206 to the mobile station 106 may be indicated by synchronization information provided by, for example, the synchronization channel (SCH) and/or the frequency correction channel (BCCH).

The adjustment of the receive characteristics in the mobile station 106 may be needed, for example, for applying an analog-to-digital conversion to the second signal 206 with optimized dynamic range and decoding the second signal 206.

In an embodiment, the measurement in the mobile station may be a power measurement and the receive characteristic may include a receive gain of the receiver of the mobile station 106. The mobile station may, for example, determine an RSSI (Receiving Signal Strength Indicator) by way of the power measurement, and adjust the receive gain based on the RSSI value in order to optimize the reception of the second signal 206.

In a general description of antenna hopping as shown in the example of Figure 2, a transmission of a carrier carrying the first signal 204 and the second signal 206 is shifted from one spatial transmission channel 210, 212 to another by way of an antenna hop 214, 216, 218, 220 performed between at least two antenna elements 228, 230. In an embodiment shown in Figure 2, during an interval 222, 224, 226 between two consecutive antenna hops 218, 214, 216, 220, the transmission power of the carrier remains constant. The antenna hop 214, 216, 218, 220 results in discontinuity in the spatial transmission channel 210, 212. The discontinuity reduces correlation between the signals in which the discontinuity takes place. A spatial transmission channel 210, 212, in general, is a composition of signal paths between the base station 102, 104 and the mobile station 106. The difference between two different spatial transmission channels 210, 212 may be characterized by, for example, their different fading patterns.

According to the invention, antenna hopping may be applied to the carrier carrying the first signal 204 and the second signal 206 such that at least a portion of the first signal 204 and at least a portion of the second signal 206 are transmitted during an interval 224 between two consecutive antenna hops 214 and 216 performed between the at least two antenna elements 228 and 230. When applying antenna hopping to the carrier in the presented manner, spatial transmission channel discontinuity is avoided between the first signal 204 and the second signal 206. This feature improves the correlation between the first signal 204 and the second signal 206, and releases the diversity gain resources concealed in the carrier. The diversity gain is obtained, for example, by using different antenna for consecutive occurrences of the first signal 204 and the second signal 206. Furthermore, an improved correlation results in an enhanced receive characteristic adjustment and gain in the quality of the reception of the second signal 206.

In an embodiment shown in Figure 2, the first signal 204 and the second signal 206 are transmitted consecutively, thus reducing the transmission time difference between the first signal 204 and the second signal 206. Consecutive transmission of the first signal 204 and the second signal 206 is especially advantageous when the transmission channel 210, 212 fades rapidly relative to the signal transmission rate of the first signal 204 and the second signal 206. A reduced transmission time between the two signals 204 and 206 improves the correlation between the two signals 204 and 206.

In an embodiment of the invention, the antenna hopping may be implemented by first timing an antenna hop 214, 216 in carrier transmission with respect to signal transition 250 from the first signal 204 to the second signal 206 such that there is a predetermined time gap 246, 248 between the signal transitions 250 and the antenna hop 214, 216 between the at least two antenna elements 228, 230. After timing the antenna hop in the carrier transmission, the antenna hop 214, 216 may be based on the timing 238, 240 of the antenna hop 214, 216. The predetermined time gap 246, 248 is for example, the duration of a time slot.

The predetermined time gap 246 between the signal transition 250 and the preceding antenna hop 214 ensures, for example, that the period of the first signal 204 subjected to the measurement carried by the mobile station 106 is sufficient. In an embodiment, the predetermined time gap 246 between the signal transition 250 and the preceding antenna hop 214 may be the order of the duration of the first signal 204.

The predetermined time gap 248 between the signal transition 250 and the antenna hop 216 succeeding the signal transition 250 ensures, for example, that a sufficient portion of the second signal 206 remains correlated. In an embodiment, the predetermined time gap 248 between the signal transition 250 and the succeeding antenna hop 216 may be the order of duration of the second signal 206.

In an embodiment of the invention, the carrier carries the first signal 204 including a first time slot and the second signal 206 including a second time slot. At least a portion of the first time slot may be subjected to a measurement for adjusting receive characteristics of a mobile station 106 for reception of at least a portion of the second time slot. Antenna hopping may be applied to the carrier such that the at least a portion of the first time slot and the at least a portion of the second time slot are transmitted during an interval 224 between the two consecutive antenna hops 214, 216. In terms of a TDMA method (Time Division Multiple Access) and especially GSM terminology, the first signal 204, the second signal 206, and the third signal 208 correspond to three bursts. Each signal transfers a burst-specific time slot in a TDMA frame structure including eight time slots. For the ease of description, the first time slot, the second time slot, and the third time slot are indicated with the same reference numerals as the first signal 204, the second signal 206, and the third signal 208, respectively. The diversity gain arises from, for example, using different antennas 228, 230 in transmitting consecutive first signals 204 when the first signal is interleaved over a number of frames.

Figure 2 further exemplifies a frame structure of a TDMA transmission. Each frame includes an equal number of time slots 204, 206, 208 confined by two consecutive TDMA frame edges 236, 232, 234. In the exemplified case, the TDMA frame edges 236, 232, 234 are located between the first time slot 204 and the second time slot 206, which in a GSM numbering scheme correspond to a time slot 7 and a time slot 0, respectively. In Figure 2, the example shows the process of applying an antenna hop 214, 216 between two consecutive frames i.e. during a TDMA frame edge 232, 234, 236 would lead to discontinuity in the spatial transmission channel 210, 212 between the first time slot 204 and the second time slot 206, and a resulting failure in reception of the second time slot 206.

In an embodiment of the invention, the second signal 206 transfers a broadcast channel, which is received by applying the receive characteristics adjusted based on the measurement of the first signal 204. A broadcast channel is a common channel transmitted to the entire cell area of the base transceiver station 102, 104 in order to provide cell information for the mobile stations 106 located in the cell. In GSM, the broadcast channel includes the following channels:
- a frequency correction channel (FCCH)
- synchronization channel (SCH)
- broadcast control channel (BCCH).

The broadcast control channel transfers cell information, such as carrier frequencies available in the cell, channel combinations and frequency hopping sequences, applied by the base transceiver station 102, 104 transmitting the broadcast control channel. It is noted that the broadcast control channel provides the information listed above not only from the serving cell but also from the neighbor cells, thus controlling the cell handover from one cell to another. For example, in terms of the GSM, a carrier carrying the broadcast channel is called a BCCH carrier according to the broadcast control channel transferred by the carrier. When the second signal 206 transfers a broadcast channel, the resulting diversity gain provides improved reliability in the broadcast channel transfer.

In an embodiment of the invention, the second signal 206 transfers a common control channel (CCCH), which is received by applying the receive characteristics adjusted based on the measurement of the first signal 204. A common control channel is a channel transmitted to the entire cell area of the base transceiver station 102, 104 in order to provide signaling information to the mobile station 106 located in the cell. In GSM, the common control channel includes the following channels:
- a paging channel (PCH)
- a random access channel (RACH)
- an access grant channel (AGCH).

A paging channel is used, for example, for call set-up and is transmitted at a relatively low rate. However, if antenna hopping is not applied the reception of the paging channel may fail. As a result, the reception of the paging channel is repeated, resulting in a delay in the call set-up and an increase in the power consumption of the mobile station 106. The invention provides more reliability in the paging channel reception and call establishment.

In an embodiment shown in Figure 2, the carrier carrying the first signal 204 and the second signal 206 transmitted from the base transceiver station 102, 104 carries the third signal 208 transferring a traffic channel (TCH). The traffic channel may be, for example, a full rate traffic channel (TCF/F), a half rate traffic channel (TCF/H), or an enhanced full rate traffic channel (TCF/EF) utilized by a GSM system. The invention enables applying antenna hopping to the entire carrier, including traffic channels, thus providing diversity gain and capacity increase in the downlink user data transfer.

In an embodiment of the invention, the carrier transmitted from the base transceiver station 102, 104 carries the third signal 208 transferring a dedicated control channel, such as the SDCCH (Stand-alone Dedicated Control Channel), SACCH (Slow Associated Control Channel), and FACCH (Fast Associated Control Channel). The invention enables applying antenna hopping to dedicated control channels, thus providing diversity gain and capacity increase in the dedicated signaling.

In an embodiment of the invention, frequency hopping is applied to the transmission of the base station 102, 104 by using the carrier carrying the first signal 204 and the second signal 206. In frequency hopping, the carrier frequency of the carrier carrying the first signal 204 and the second signal 206 is included in the frequency hopping sequence. A frequency hopping may apply, for example, random or cyclic sequences. Frequency hopping and implementation of the frequency hopping is known to one skilled in the art, and will not be described in further detail. Especially, in the GSM system, the antenna hopping enables the frequency hopping to BCCH and CCCH channels, which frequency hopping is not available in a prior art GSM system.

In an embodiment of the invention, the antenna hopping is applied to the carrier according to a predetermined antenna hopping sequence 200 including at least one antenna hop interval 222, 224, 226 between two consecutive antenna hops 218, 214, 216, 220. The antenna hopping sequence 200 may define at least one of the following:
- antenna weighting applied to the at least two antenna elements 228, 230 during the antenna hop interval 222, 224, 226
- timing 238, 240, 242, 244 of the antenna hops 218, 214, 216, 220.

The details in the antenna hopping sequence 200 affect the diversity gain obtained by the antenna hopping and thus also the performance of the cellular telecommunication system.

The antenna hopping sequence 200 may range from the duration of a few time slots to the duration of several frames. In an embodiment, the antenna hopping sequence 200 may cover a GSM multi-frame or a super-frame.

The antenna hop sequence 200 may be optimized based on the following criteria:
- effect of the antenna hopping sequence on the performance of a traffic channel carried by the carrier
- effect of the antenna hopping sequence on the performance of a common control channel carried by the carrier
- effect of the antenna hopping sequence on the performance of a broadcast channel carried by the carrier
- effect of the antenna hopping sequence on the performance of a dedicated control channel carrier by carrier
- feedback information from the mobile station
- effect of the antenna hopping sequence on the capacity of the cellular telecommunication system
- effect of the antenna hopping sequence combined with frequency hopping on the performance.

The effect of the antenna hopping sequence 200 on the performance of the traffic channel, the common control channel, the broadcast channel, and the dedicated control channel may be estimated on a theoretical basis, and the antenna hopping sequence 200 may be designed accordingly. When a slow channel is transmitted, which is the case with SACCH (Slow Associated Control Channel), for example, it is desirable to design the antenna hop sequence 200 such that the slow channel is transmitted evenly from each antenna element 228, 230 included in the antenna hopping sequence 200.

In an embodiment, the mobile station 106 may evaluate the quality of a signal corresponding to the antenna hopping interval 224, 226, 222, and provide feedback information on the quality for the base transceiver station 102, 104. The base transceiver station 102, 104 may rank antenna configurations corresponding to each antenna hopping interval 224, 226, 222 on the basis of the feedback information, and design the antenna hopping sequence 200 such that an antenna configuration providing a good signal path is used more than an antenna configuration with a poorer signal path.

In an embodiment, the antenna hop sequence 200 is optimized within each interleaving period for logical channels, such as the traffic channel, to maximize the de-correlation of each logical channel during the antenna hop sequence 200. If frequency hopping is used, the antenna hopping may be optimized for frequency hopping within an interleaving period. If the same frequency is repeated during the interleaving period, a different antenna element 228, 230 is preferably used than during the previous transmission of the same frequency. If the number of frequencies in a frequency hopping sequence is smaller than a number of bursts in the interleaving period, it is preferable to re-use antenna-frequency combinations such that the antenna-frequency combinations maximize the de-correlation.

In an embodiment of the invention, timing 238, 240, 242, 244 of the antenna hop 214, 216, 218, 220 is cycled in the antenna hopping sequence 200. For example, in the antenna hopping sequence 200 shown in Figure 2, the timing 238, 240, 242, 244 is shifted by a time slot in successive intervals 222, 224, 226, provided that the antenna hop does not occur between the first signal 204 and the second signal 206. The cycling pattern is not, however, restricted to the given example, but can be implemented in various manners based, for example, on quasi-random cycling.

It is also possible to perform signal measurements in the mobile stations 106 in the cell area, and transmit feedback information about the signal measurements from the mobile stations 106 to the base transceiver station 102, ' 104.

With further reference to Figure 2, embodiments of the base transceiver station 102, 104 are described.

In an embodiment, the at least two antenna elements 228, 230 are arranged such that the correlation between the antenna elements 228, 230 is low. The low correlation may be achieved by locating the antenna elements 228, 230 with the minimum spatial separation of the order of a wavelength of the carrier. In an embodiment, the low correlation is achieved with different polarizations of the two antenna elements 228, 230.

The at least two spatial transmission channels 210, 212 may be implemented, for example, by controlling antenna weights (W₁, W₂) of each antenna element 228, 230 such that a specific set of antenna weights (W₁, W₂) corresponds to a spatial transmission channel 210, 212.

In an embodiment, the antenna hopping is implemented with low correlating antenna elements 228, 230 by using, for example, antenna weights (0,1) and (1,0). This antenna arrangement corresponds to a situation where one antenna element 228, 230 transmits the carrier while the other antenna element 228, 230 is inactive in transmitting the carrier. It is noted that the antenna elements 228, 230 may simultaneously transmit other carriers.

In an embodiment, the at least two antenna elements 228, 230 may be configured to provide at least two different antenna beam patterns. The antenna beam patterns may be produced by the antenna elements 228, 230 with high correlation, which may be achieved by separating the antenna elements by the minimum separation of the order of half a wavelength of the carrier. When performing an antenna hop 214, 216 in a beam-pattern case, one beam pattern may change to another in a step-like manner or semi-continuously when the direction of the beam patterns is steered. In both cases, the spatial transmission channel SC1, SC2 may be changed from one to another.

Antenna arrangements and methods for providing transmission channel applied to antenna hopping may vary. However, the invention is not restricted to the examples of the presented antenna arrangements and methods for providing transmission channels, but may be applied to any antenna arrangement and a method providing at least two different spatial transmission channels 210, 212.

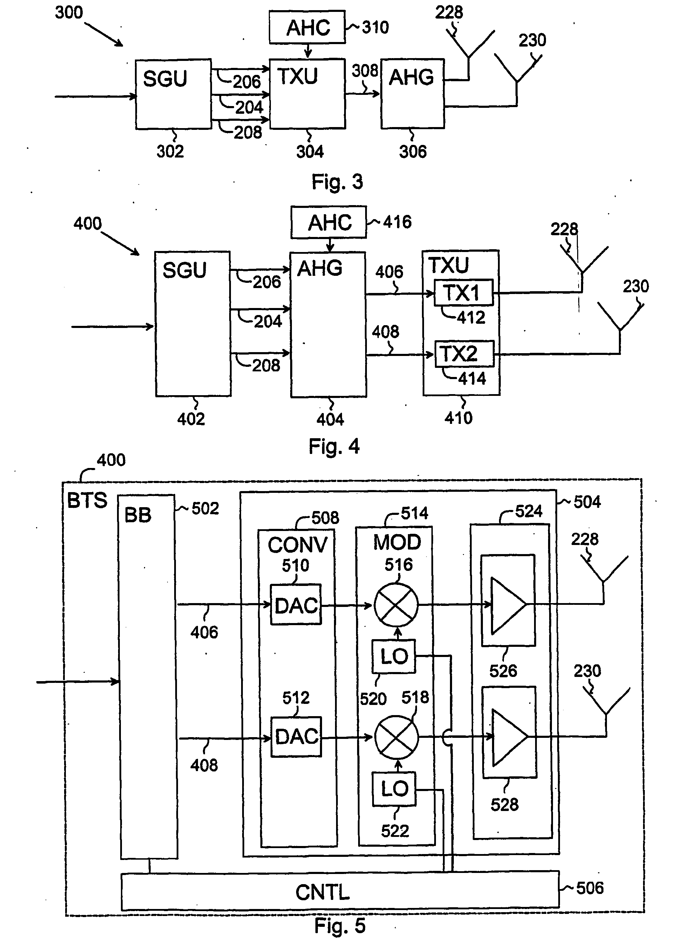

In the exemplified base transceiver station 300 shown in Figure 3, a first signal 204 and a second signal 206 are generated in the signal generating unit 302 and delivered to a transmitter unit 304 connected to the signal generating unit 302. In an embodiment, the first signal 204, the second signal 206, and the third signal 208 are generated digitally using a digital signal processor with software. In another embodiment, the first signal 204 and the second signal 206 are generated using an ASIC (Application Specific Integrated Circuit).

The carrier 308 carrying the first signal 204, the second signal 206, and the third signal 208 is generated in a transmitter unit 304 connected to the signal generating unit 302. In an embodiment, the transmitter unit 304 mixes a carrier radio frequency waveform with base band or intermediate band first signal 204, the second signal 206, and the third signal 208. Thus, the mixing results in the carrier carrying the first signal 204, the second signal 206, and the third signal 208.

The carrier 308 may carry the first signal 204, the second signal 206, and the third signal 208. This results, in one embodiment, in the carrier carrying the first signal 204, the second signal 206, and the third signal 208 is inputted from the transmitter unit 304 into the antenna hop generator 306 connected to the transmitter unit 304. The transmitter unit 304 connects the carrier 308 to the antenna elements 228 and 230 according to an antenna hopping sequence, such as the one shown in Figure 2.

Figure 3 shows an antenna hop controller 310 connected to the antenna hop generator 304. The antenna hop controller 310 provides, for example, the antenna hop sequences for the antenna hop generator 304.

Figure 4 shows an embodiment of a base transceiver station 400, wherein the transmitter unit 410 includes at least two transmitters 412, 414. Each transmitter provides carriers, which are mixed with the first signal 204 and the second signal 206. Each transmitter 412, 414 is connected to the antenna element 228, 230 such that a transmitter-antenna element pair forms an individual signal path in the base transceiver station 300. A signal generator unit 402 generates the first signal 204, the second signal 206, and the third signal 208, which are inputted into the antenna hop generator 404. An antenna hop generator 404 switches the carrier, denoted by 406 or 408, to the transmitter 412, 414 according to the antenna hopping sequence provided by an antenna hop controller 416. The frequency hopping may be implemented by using a switch between the transmitter unit 410 and the antenna elements 228, 230, which switch routes a desired carrier to a desired antenna element 228, 230 according to a frequency hopping sequence. The switch providing the frequency hopping may also be implemented by changing the frequency produced by each transmitter 412, 414 such that the desired frequency hopping sequence is obtained.

Figure 5 shows an example of a base transceiver station 500 including a base band unit 502, a transmitter unit 504 connected to the base band unit 502 and the antenna elements 228, 230, and a control unit 506 connected to the base band unit 502 and the transmitter 504.

The signal generating unit 302, 402 shown in Figures 3 and 4 may be implemented in the base band unit 502 by using a digital signal processor and software and/or an ASIC. The physical channels and the frame structure containing the first signal 204, the second signal 206, and possibly the third signal 208 may be formed in the base band unit 502.

The base band unit 502 outputs a digital base band signal 406, 408 including the first signal 204 and the second signal 206. In an embodiment, the digital base band signal 406, 408 includes the third signal 208.

In an embodiment of the invention, the transmitter unit 504 includes a converter unit 508 for converting digital base band signal 406, 408 received from the base band unit 502 into digital form. In an embodiment, the converter unit 508 includes a plurality of digital-to-analog converters 510, 512, each of which converts a digital base band signal 406, 408 into analog form.

As shown in the example of Figure 5, the analog form base band signals are inputted into a modulator unit 514, which may include a plurality of mixers 516, 518. Each mixer 516, 518 mixes an analog base band signal with a carrier frequency, thus providing a carrier carrying the first signal 204 and the second signal 206. The carrier frequency may be generated by a mixer-specific local oscillator 520, 522. The local oscillator 520, 522 may be controlled by the control unit 506, which, for example, contains the frequency hopping sequence according to which the local oscillator frequencies and thus the carrier frequencies are controlled.

A carrier generated in each mixer 516, 518 is inputted into an amplifier unit 524 connected to the antenna elements 228, 230, which amplifier unit 524 amplifies the carrier for transmission. The amplifier unit 524 may include a plurality of amplifiers 526, 528, which may amplify each carrier independently.

The transmitter unit 504 provides a plurality of signal paths formed by a chain of digital-to-analog converter 510, 512, a mixer 516, 518, an amplifier 526, 528, and an antenna element 228, 230. The antenna hop generator 306, 404 may be implemented in the base band unit 502 by directing the digital base band signal 406, 408, which includes the first signal 204 and the second signal 206, to a desired signal path. The antenna hopping sequence con- - trol, such as timing of the antenna hops 214, 216, 218, 220 according to the invention and the antenna weights, may be stored and managed by the control unit 506 by using a software application or an ASIC.

Furthermore, the mapping of the logical channels, such as the broadcast channel, to a physical channel may be implemented in the control unit 506.

The antenna hopping sequence 200 may be optimized with an external procedure in the higher layers of the cellular telecommunication system. The antenna hop controller 310, 416 may be implemented with a computer program located in the control unit 506.

According to an aspect, the invention provides a base transceiver station including devices 228, 230, 304, 410, 504 for transmitting a carrier 308 carrying the first signal 204 and the second signal 206. At least a portion of the first signal 204 may be subjected to a measurement for adjusting receive characteristic of the mobile station 106 for reception of at least a portion of the second signal 206, and device 306 for applying antenna hopping to the carrier 308 such that the at least a portion of the first signal 204 and the at least a portion of the second signal 206 are transmitted during the interval 224 between two consecutive antenna hops 214, 216 between the at least two antenna elements 228, 230.

The methodology according to embodiments of the invention is demonstrated by way of example using the flow chart shown in Figure 6. In start 600, the method is started. In 602, the carrier transmitting the first signal 204 and the second signal 206 is transmitted. In 604, antenna hopping is applied to the carrier such that at least a portion of the first signal 204 and at least a portion of the second signal 206 are transmitted during an interval 224 between two consecutive antenna hops 214, 216. In 606, the antenna hop 214, 216 is timed, and the antenna hop 214, 216 is performed. In 610, frequency hopping is applied to the transmission such that the carrier carrying the first signal 204 and the second signal 206 is included in the frequency hopping. In 612, the method is stopped.

Even though the invention is described above with reference to an example according to the accompanying drawings, it is clear that the invention is not restricted thereto but it can be modified in several ways within the scope of the appended claims.

## Claims

1. A transmission method in a base transceiver station (102, 104) of a cellular telecommunication system, the base transceiver station applying antenna hopping between at least two antenna elements, the method comprising:
transmitting (602) a carrier carrying a first signal and a second signal, at least a portion of the first signal being subjected to a measurement for adjusting receive characteristics of a mobile station (106) for a reception of at least a portion of the second signal; and
applying (604) antenna hopping to the carrier such that the at least a portion of the first signal and the at least a portion of the second signal are transmitted during an interval between two consecutive antenna hops between at least two antenna elements.

2. A method according to claim 1, wherein the transmitting step (602) comprises transmitting the carrier carrying the first signal, at least a portion of which is subjected to a power measurement for adjusting receive gain of the mobile station for the reception of the at least a portion of the second signal.

3. A method according to claim 1, further comprising:
timing (606) an antenna hop in a carrier transmission with respect to a signal transition from the first signal to the second signal such that there is a predetermined time gap between the signal transition and the antenna hop between the at least two antenna elements; and
performing (608) the antenna hop based on timing of the antenna hop.

4. A method according to claim 1, wherein the transmitting step comprises transmitting the carrier carrying the first signal and the second signal consecutively.

5. A method according to claim 1, wherein the applying step comprises applying the antenna hopping to the carrier according to a predetermined antenna hopping sequence comprising at least one antenna hop interval between two consecutive antenna hops, the antenna hopping sequence defining at least one of the following:
antenna weighting applied to the at least two antenna elements during an antenna hop interval; and
timing of the antenna hops.

6. A method according to claim 5, wherein the applying step comprises applying the antenna hopping to the carrier according to the antenna hopping sequence optimized based on at least one criterion selected from a group comprising:
effect of the antenna hopping sequence on a performance of a traffic channel carried by the carrier;
effect of the antenna hopping sequence on a performance of a common control channel carried by the carrier;
effect of the antenna hopping sequence on a performance of a broadcast channel carried by the carrier;
effect of the antenna hopping sequence on a performance of a dedicated control channel carried by the carrier;
feedback information from the mobile station; and
effect of the antenna hopping sequence on the capacity of a cellular telecommunication system.

7. A method according to claim 5, wherein the applying step comprises applying antenna hopping to the carrier according to an antenna hopping sequence which maximizes the de-correlation of at least one channel carried by the carrier within at least one interleaving period.

8. A method according to claim 1, wherein the transmitting step comprises transmitting the carrier carrying the second signal transferring a channel selected from a group comprising at least one of:
a broadcast channel; and
a common control channel.

9. A method according to claim 1, wherein the transmitting step comprises transmitting the carrier carrying a third signal transferring a channel selected from a group comprising at least one of:
a traffic channel; and
a dedicated control channel.

10. A method according to claim 1, further comprising applying frequency hopping to a transmission of a base station by using the carrier.

11. A method according to claim 1, wherein the transmitting step comprises transmitting the carrier carrying the first signal including a first time slot and the second signal including a second time slot, at least a portion of the first time slot being subjected to a measurement for adjusting the receive characteristics of the mobile station for the reception of at least a portion of the second time slot; and
wherein the applying step comprises applying the antenna hopping to the carrier such that the at least a portion of the first time slot and the at least a portion of the second time slot are transmitted during an interval between the two consecutive antenna hops.

12. A base transceiver station (102, 104) of a cellular telecommunication system, the base transceiver station (102, 104) comprising:
transmitting means (302, 304, 228, 230) for transmitting a carrier carrying a first signal and a second signal, at least a portion of the first signal being subjected to a measurement for adjusting receive characteristics of a mobile station (106) for a reception of at least a portion of the second signal; and
applying means (306) for applying antenna hopping to the carrier such that the at least a portion of the first signal and the at least a portion of the second signal are transmitted during an interval between two consecutive antenna hops between at least two antenna elements.

13. A base transceiver station according to claim 12, wherein the transmitting means comprise a signal generating unit (302) for generating the first signal and the second signal, a transmitter unit (304) connected to the signal generating unit (302) for generating a carrier carrying the first signal and the second signal, and at least two antenna elements (228, 230) operationally connected to the transmitter unit (304) for transmitting the carrier carrying the first signal and the second signal, and wherein the applying means comprises an antenna hop generator (306) operationally connected to the transmitter unit for applying at least two antenna hops to the carrier such that the at least a portion of the first signal and the at least a portion of the second signal are transmitted during an interval between two consecutive antenna hops between at least two antenna elements.

14. A base transceiver station according to claim 13, wherein the signal generating unit (302) is configured to generate the first signal, at least a portion of which is subjected to a power measurement for adjusting receive gain of the mobile station for the reception of the at least a portion of the second signal.

15. A base transceiver station according to claim 13, wherein the antenna hop-generator (306) is configured to time an antenna hop in a carrier transmission with respect to a signal transition from the first signal to the second signal such that there is a predetermined time gap between the signal transition and the antenna hop between the at least two antenna elements; and
wherein the antenna hop generator (306) is configured to perform the antenna hop based on timing of the antenna hop.

16. A base transceiver station according to claim 13, wherein the transmitter unit (304) is configured to generate the carrier carrying the first signal and the second signal consecutively.

17. A base transceiver station according to claim 13, further comprising:
an antenna hop controller (310) connected to the antenna hop generator (304), the antenna hop controller (310) for providing a predetermined antenna hopping sequence comprising an antenna hop interval between two consecutive antenna hops, the antenna hopping sequence defining at least one of the following: antenna weighting applied to the at least two antenna elements during the antenna hop interval, and timing of the antenna hops; and
wherein the antenna hop generator (306) is configured to apply the at least two antenna hops to the carrier according to the antenna hopping sequence.

18. A base transceiver station according to claim 17, wherein the antenna hop controller (310) is configured to provide an antenna hopping sequence which maximizes a de-correlation of at least one channel carried by the carrier within at least one interleaving period.

19. A base transceiver station according to claim 17, wherein the antenna hop controller (310) is configured to provide an antenna hopping sequence optimized based on at least one criterion selected from a group comprising:
effect of the antenna hopping sequence on a performance of a traffic channel carried by the carrier;
effect of the antenna hopping sequence on a performance of a common control channel carried by the carrier;
effect of the antenna hopping sequence on a performance of a broadcast channel carried by the carrier;
effect of the antenna hopping sequence on a performance of a dedicated control channel carried by the carrier;
effect of the antenna hopping sequence on a capacity of a cellular telecommunication system; and
feedback information from the mobile station.

20. A base transceiver station according to claim 13, wherein the signal generating unit (302) is configured to generate the second signal transferring a channel selected from a group comprising at least one of:
a broadcast channel; and
a common control channel.

21. A base transceiver station according to claim 13, wherein the signal generating unit (302) is configured to generate a third signal transferring a channel selected from a group comprising at least one of: a traffic channel, a dedicated control channel; and
the transmitter unit (304) is configured to generate the carrier carrying the third signal.

22. A base transceiver station according to claim 13, wherein the transmitter unit (304) is configured to generate a plurality of carriers; and
wherein the transmitter unit (304) is configured to apply frequency hopping to a transmission of the base station by using the carrier.

23. A base transceiver station according to claim 13, wherein the signal generating unit (302) is configured to generate the first signal including a first time slot and the second signal including a second time slot, at least a portion of the first time slot being subjected to a measurement for adjusting the receive characteristics of the mobile station for the reception of at least a portion of the second time slot; and
wherein the antenna hop generator (306) is configured to apply antenna hopping to the carrier such that the at least a portion of the first time slot and the at least a portion of the second time slot are transmitted during an interval between the two consecutive antenna hops.

## Patentansprüche

1. Sendeverfahren in einer Basis-Sende-/Empfangsstation (102, 104) eines zellularen Telekommunikationssystems, wobei die Basis-Sende-/Empfangsstation Antennenspringen zwischen wenigstens zwei Antennenelementen anwendet, wobei das Verfahren aufweist:
Senden (602) eines Trägers, der ein erstes und ein zweites Signal trägt, wobei wenigstens ein Abschnitt des ersten Signals zum Anpassen von Empfangseigenschaften einer Mobilstation (106) für einen Empfang von wenigstens einem Abschnitt des zweiten Signals einer Messung unterworfen wird; und
Anwenden (604) von Antennenspringen auf den Träger derart, dass wenigstens ein Teil des ersten Signals und wenigstens ein Teil des zweiten Signals während eines Intervalls zwischen zwei aufeinanderfolgenden Antennensprüngen zwischen wenigstens zwei Antennenelementen gesendet werden.

2. Verfahren gemäß Anspruch 1, wobei der Sendeschritt (602) ein Senden des Trägers, der das erste Signal trägt, von dem wenigstens ein Teil einer Leistungsmessung zum Anpassen einer Empfangsverstärkung der Mobilstation für den Empfang des wenigstens einen Teils des zweiten Signals unterworfen wird, aufweist.

3. Verfahren gemäß Anspruch 1, weiter aufweisend:
Zeitsteuern (606) eines Antennensprungs bei einer Trägersendung in Bezug auf einen Signalübergang vom ersten Signal auf das zweite Signal derart, dass es einen vorbestimmten Zeitspalt zwischen dem Signalübergang und dem Antennensprung zwischen den wenigstens zwei Antennenelementen gibt; und
Durchführen (608) des Antennensprungs basierend auf Zeitsteuern des Antennensprungs.

4. Verfahren gemäß Anspruch 1, wobei der Sendeschritt aufweist ein nacheinander Senden des Trägers, der das erste Signal und das zweite Signal trägt.

5. Verfahren gemäß Anspruch 1, wobei der Schritt des Anwendens aufweist ein Anwenden des Antennenspringens auf den Träger gemäß einer vorbestimmten Antennensprungsequenz, die wenigstens ein Antennensprungintervall zwischen zwei aufeinanderfolgenden Antennensprüngen aufweist, wobei die Antennensprungsequenz wenigstens eines der Folgenden definiert:
Antennengewichten, das auf die wenigstens zwei Antennenelemente während eines Antennensprungintervalls angewendet wird; und
Zeitsteuern der Antennensprünge.

6. Verfahren gemäß Anspruch 5, wobei der Schritt des Anwendens aufweist ein Anwenden des Antennenspringens auf den Träger gemäß der Antennensprungsequenz, die basierend auf wenigstens einem Kriterium optimiert ist, welches aus einer Gruppe ausgewählt wurde, die aufweist:
Wirkung der Antennensprungsequenz auf eine Leistung eines Verkehrskanals, der durch den Träger getragen wird;
Wirkung der Antennensprungsequenz auf eine Leistung eines allgemeinen Steuerkanals, der durch den Träger getragen wird;
Wirkung der Antennensprungsequenz auf eine Leistung eines Rundsendekanals, der durch den Träger getragen wird;
Wirkung der Antennensprungsequenz auf eine Leistung eines festzugeordneten Steuerkanals, der durch den Träger getragen wird;
Feedback-Informationen von der Mobilstation; und
Wirkung der Antennensprungsequenz auf die Kapazität eines zellularen Telekommunikationssystems.

7. Verfahren gemäß Anspruch 5, wobei der Schritt des Anwendens aufweist ein Anwenden von Antennenspringen auf den Träger gemäß einer Antennensprungsequenz, welche die Nichtkorrelation von wenigstens einen Kanal maximiert, der durch den Träger getragen wird, innerhalb wenigstens einer Verschachtelungsperiode.

8. Verfahren gemäß Anspruch 1, wobei der Schritt des Sendens aufweist ein Senden des Trägers, der das zweite Signal trägt, welches einen Kanal überträgt, der aus einer Gruppe gewählt wurde, die aufweist:
einen Rundsendekanal; und/oder
einen allgemeinen Steuerkanal.

9. Verfahren gemäß Anspruch 1, wobei der Schritt des Sendens aufweist ein Senden des Trägers, der ein drittes Signal trägt, welches einen Kanal überträgt, der aus einer Gruppe ausgewählt wurde, die aufweist:
einen Verkehrskanal; und/oder einen fest zugeordneten Steuerkanal.

10. Verfahren gemäß Anspruch 1, weiter mit einem Anwenden von Frequenzspringen auf ein Senden einer Basisstation durch Verwendung des Trägers.

11. Verfahren gemäß Anspruch 1, wobei der Schritt des Sendens aufweist ein Senden des Trägers, der das erste Signal einschließlich eines ersten Zeitschlitzes und das zweite Signal einschließlich eines zweiten Zeitschlitzes trägt, wobei wenigstens ein Teil des ersten Zeitschlitzes einer Messung zum Anpassen der Empfangseigenschaft der Mobilstation für den Empfang von wenigstens einem Teil des zweiten Zeitschlitzes unterworfen wird; und
wobei der Schritt des Anwendens aufweist ein Anwenden des Antennenspringens auf den Träger derart, dass wenigstens ein Teil des ersten Zeitschlitzes und der wenigstens eine Teil des zweiten Zeitschlitzes während eines Intervalls zwischen zwei aufeinanderfolgenden Antennensprüngen gesendet werden.

12. Basis-Sende-/Empfangsstation (102, 104) eines zellularen Telekommunikationssystems, wobei die Basis-Sende-/Empfangsstation (102, 104) aufweist:
Sendemittel (302, 304, 228, 230) zum Senden eines Trägers, der ein erstes und ein zweites Signal trägt, wobei wenigstens ein Teil des ersten Signals einer Messung zum Anpassen von Empfangseigenschaften einer Mobilstation (106) zum Empfangen von wenigstens einem Teil des zweiten Signals unterworfen wird; und
Anwendungsmittel (306) zum Anwenden von Antennenspringen auf den Träger derart, dass wenigstens ein Teil des ersten Signals und der wenigstens eine Teil des zweiten Signals während eines Intervalls zwischen zwei aufeinanderfolgenden Antennensprüngen zwischen wenigstens zwei Antennenelementen gesendet werden.

13. Basis-Sende-/Empfangsstation gemäß Anspruch 12, wobei die Sendemittel aufweisen eine Signalerzeugungseinheit (302) zum Erzeugen des ersten Signals und des zweiten Signals, eine Sendeeinheit (304), die mit der Signalerzeugungseinheit (302) verbunden ist, zum Erzeugen eines Trägers, der das erste Signal und das zweite Signal trägt, und wenigstens zwei Antennenelemente (228, 230), die operationell mit der Sendeeinheit (304) verbunden sind, zum Übertragen des Trägers, der das erste Signal und das zweite Signal trägt, und wobei die Anwendungsmittel aufweisen eine Antennensprungerzeugungseinrichtung (306), die operationell mit der Sendeeinheit verbunden ist, zum Anwenden von wenigstens zwei Antennensprüngen auf den Träger derart, dass der wenigstens eine Teil des ersten Signal und der wenigstens eine Teil des zweiten Signals während eines Intervalls zwischen zwei aufeinanderfolgenden Antennensprüngen zwischen wenigstens zwei Antennenelementen gesendet werden.

14. Basis-Sende-/Empfangsstation gemäß Anspruch 13, wobei die Signalerzeugungseinheit (302) konfiguriert ist, das erste Signal zu erzeugen, von dem wenigstens ein Teil einer Leistungsmessung zum Anpassen einer Empfangsverstärkung der Mobilstation für den Empfang des wenigstens einen Teils des zweiten Signals unterworfen wird.

15. Basis-Sende-/Empfangsstation gemäß Anspruch 13, wobei die Antennensprungerzeugungseinrichtungen (306) konfiguriert ist, einen Antennensprung bei einer Trägersendung in Bezug auf einen Signalübergang vom ersten Signal auf das zweite Signal derart zeitzusteuern, dass es einen vorbestimmten Zeitspalt zwischen dem Signalübergang und dem Antennensprung zwischen den wenigstens zwei Antennenelementen gibt; und wobei die Antennensprungerzeugungseinrichtung (306) konfiguriert ist, den Antennensprung basierend auf einer Zeitsteuerung des Antennensprungs durchzuführen.

16. Basis-Sende-/Empfangsstation gemäß Anspruch 13, wobei die Sendeeinheit (304) konfiguriert ist, den Träger, der das erste Signal und das zweite Signal trägt, aufeinanderfolgend zu erzeugen.

17. Basis-Sende/Empfangsstation gemäß Anspruch 13, weiter aufweisend:
eine Antennensprungsteuereinrichtung (310), die mit der Antennensprungerzeugungseinrichtung (304) verbunden ist, wobei die Antennensprungsteuereinrichtung (310) zum Bereitstellen einer vorbestimmten Antennensprungsequenz ist, die aufweist ein Antennensprungintervall zwischen zwei aufeinanderfolgenden Antennensprüngen, wobei die Antennensprungsequenz definiert: Antennengewichten, das auf die wenigstens zwei Antennenelemente während des Antennensprungintervalls angewendet wird, und/oder Zeitsteueren der Antennensprünge; und
wobei die Antennensprungerzeugungseinrichtung (306) konfiguriert ist, die wenigstens zwei Antennensprünge auf den Träger gemäß der Antennensprungsequenz anzuwenden.

18. Basis-Sende-/Empfangsstation gemäß Anspruch 17, wobei die Antennensprungsteuereinrichtung (310) konfiguriert ist, eine Antennensprungsequenz bereitzustellen, die eine Nichtrkorrelation von wenigstens einem Kanal, der durch den Träger getragen wird, innerhalb wenigstens einer Verschachtelungsperiode maximiert.

19. Basis-Sende-/Empfangsstation gemäß Anspruch 17, wobei die Antennensprungsteuereinrichtung (310) konfiguriert ist, eine Antennensprungsequenz bereitzustellen, die basierend auf wenigstens einem Kriterium optimiert ist, dass aus einer Gruppe gewählt wurde, die aufweist:
Wirkung der Antennensprungsequenz auf eine Leistung eines Verkehrskanals, der durch den Träger getragen wird;
Wirkung der Antennensprungsequenz auf eine Leistung eines allgemeinen Steuerkanals, der durch den Träger getragen wird;
Wirkung der Antennensprungsequenz auf eine Leistung eines Rundfunkkanals der durch den Träger getragen wird;
Wirkung der Antennensprungsequenz auf eine Leistung eines festzugeordneten Steuerkanals, der durch den Träger getragen wird;
Wirkung der Antennensprungsequenz auf eine Kapazität eines zellularen Telekommunikationssystems; und
Feedback-Informationen von der Mobilstation.

20. Basis-Sende-/Empfangsstation gemäß Anspruch 13, wobei die Signalerzeugungseinheit (302) konfiguriert ist, das zweite Signal zu erzeugen, das einen Kanal überträgt, der aus einer Gruppe gewählt ist, die aufweist:
einen Rundfunkkanal; und/oder
einen allgemeinen Steuerkanal.

21. Basis-Sende-/Empfangsstation gemäß Anspruch 13, wobei die Signalerzeugungseinheit (302) konfiguriert ist, ein drittes Signal zu erzeugen, das einen Kanal überträgt, der aus einer Gruppe gewählt ist, die aufweist: einen Verkehrskanal und/oder einen festzugeordneten Steuerkanal; und die Sendeeinheit (304) konfiguriert ist, den Träger, der das dritte Signal trägt, zu erzeugen.

22. Basis-Sende-/Empfangsstation gemäß Anspruch 13, wobei die Sendeeinheit (304) konfiguriert ist, eine Vielzahl von Trägern zu erzeugen; und
wobei die Sendeeinheit (304) konfiguriert ist, Frequenzspringen auf ein Senden der Basisstation durch Verwenden des Trägers anzuwenden.

23. Basis-Sende-/Empfangsstation gemäß Anspruch 13, wobei die Signalerzeugungseinheit (302) konfiguriert ist, das erste Signal einschließlich eines ersten Zeitschlitzes und das zweite Signal einschließlich eines zweiten Zeitschlitzes zu erzeugen, wobei wenigstens ein Teil des ersten Zeitschlitzes einer Messung zum Anpassen der Empfangseigenschaft der Mobilstation für den Empfang von wenigstens einem Teil des zweiten Zeitschlitzes unterworfen wird; und
wobei die Antennensprungerzeugungseinrichtung (306) konfiguriert ist, Antennenspringen auf den Träger derart anzuwenden, dass der wenigstens eine Teil des ersten Zeitschlitzes und der wenigstens eine Teil des zweiten Zeitschlitzes während eines Intervalls zwischen den zwei aufeinanderfolgenden Antennensprünge gesendet werden.

## Revendications

1. Procédé de transmission dans une station d'émission-réception de base (102, 104) d'un système de télécommunication cellulaire, la station d'émission-réception de base appliquant un bond d'antenne entre au moins deux éléments d'antenne, le procédé comprenant les étapes consistant à :
transmettre (602) une porteuse portant un premier signal et un deuxième signal, au moins une partie du premier signal étant soumise à une mesure pour régler des caractéristiques de réception d'une station mobile (106) pour une réception d'au moins une partie du deuxième signal ; et
appliquer (604) un bond d'antenne sur la porteuse de sorte que l'au moins une partie du premier signal et l'au moins une partie du deuxième signal soient transmises au cours d'un intervalle entre deux bonds d'antenne consécutifs entre au moins deux éléments d'antenne.

2. Procédé selon la revendication 1, dans lequel l'étape consistant à transmettre (602) comprend le fait de transmettre la porteuse portant le premier signal, au moins une partie duquel est soumise à une mesure de puissance pour régler un gain de réception de la station mobile pour la réception de l'au moins une partie du deuxième signal.

3. Procédé selon la revendication 1, comprenant en outre les étapes consistant à :
synchroniser (606) un bond d'antenne dans une transmission de porteuse par rapport à une transition de signal du premier signal au deuxième signal de sorte qu'il y ait un espace temporel prédéterminé entre la transition de signal et le bond d'antenne entre les au moins deux éléments d'antenne ; et
exécuter (608) le bond d'antenne sur la base de la synchronisation du bond d'antenne.

4. Procédé selon la revendication 1, dans lequel l'étape consistant à transmettre comprend le fait de transmettre la porteuse portant le premier signal et le deuxième signal consécutivement.

5. Procédé selon la revendication 1, dans lequel l'étape consistant à appliquer comprend le fait d'appliquer le bond d'antenne sur la porteuse selon une séquence prédéterminée de bonds d'antenne comprenant au moins un intervalle de bond d'antenne entre deux bonds d'antenne consécutifs, la séquence de bonds d'antenne définissant au moins un des éléments suivants :
une pondération d'antenne appliquée sur les au moins deux éléments d'antenne au cours d'un intervalle de bond d'antenne ; et
une synchronisation du bond d'antennes.

6. Procédé selon la revendication 5, dans lequel l'étape consistant à appliquer comprend le fait d'appliquer le bond d'antenne sur la porteuse selon la séquence de bonds d'antenne optimisée sur la base d'au moins un critère sélectionné parmi un groupe comprenant :
un effet de la séquence de bonds d'antenne sur des performances d'un canal de trafic porté par la porteuse ;
un effet de la séquence de bonds d'antenne sur des performances d'un canal de contrôle commun porté par la porteuse ;
un effet de la séquence de bonds d'antenne sur des performances d'un canal de diffusion porté par la porteuse ;
un effet de la séquence de bonds d'antenne sur des performances d'un canal de contrôle dédié porté par la porteuse ;
des informations en retour à partir de la station mobile ; et
un effet de la séquence de bonds d'antenne sur la capacité d'un système de télécommunication cellulaire.

7. Procédé selon la revendication 5, dans lequel l'étape consistant à appliquer comprend le fait d'appliquer un bond d'antenne sur la porteuse selon une séquence de bonds d'antenne qui maximise la dé-corrélation d'au moins un canal porté par la porteuse au sein d'au moins une période d'entrelacement.

8. Procédé selon la revendication 1, dans lequel l'étape consistant à transmettre comprend le fait de transmettre la porteuse portant le deuxième signal transférant un canal sélectionné parmi un groupe comprenant au moins un parmi :
un canal de diffusion ; et
un canal de contrôle commun.

9. Procédé selon la revendication 1, dans lequel l'étape consistant à transmettre comprend le fait de transmettre la porteuse portant un troisième signal transférant un canal sélectionné parmi un groupe comprenant au moins un parmi :
un canal de trafic ; et
un canal de contrôle dédié.

10. Procédé selon la revendication 1, comprenant en outre l'étape consistant à appliquer un bond de fréquence sur une transmission d'une station de base en utilisant la porteuse.

11. Procédé selon la revendication 1, dans lequel l'étape consistant à transmettre comprend le fait de transmettre la porteuse portant le premier signal comprenant un premier intervalle de temps et le deuxième signal comprenant un second intervalle de temps, au moins une partie du premier intervalle de temps étant soumise à une mesure pour régler les caractéristiques de réception de la station mobile pour la réception d'au moins une partie du second intervalle de temps ; et
dans lequel l'étape consistant à appliquer comprend le fait d'appliquer le bond d'antenne sur la porteuse de sorte que l'au moins une partie du premier intervalle de temps et l'au moins une partie du second intervalle de temps soient transmises au cours d'un intervalle entre les deux bonds d'antenne consécutifs.

12. Station d'émission-réception de base (102, 104) d'un système de télécommunication cellulaire, la station d'émission-réception de base (102, 104) comprenant :
des moyens de transmission (302, 304, 228, 230) pour transmettre une porteuse portant un premier signal et un deuxième signal, au moins une partie du premier signal étant soumise à une mesure pour régler des caractéristiques de réception d'une station mobile (106) pour une réception d'au moins une partie du deuxième signal ; et
des moyens d'application (306) pour appliquer un bond d'antenne sur la porteuse de sorte que l'au moins une partie du premier signal et l'au moins une partie du deuxième signal soient transmises au cours d'un intervalle entre deux bonds d'antenne consécutifs entre au moins deux éléments d'antenne.

13. Station d'émission-réception de base selon la revendication 12, dans laquelle les moyens de transmission comprennent une unité de génération de signal (302) pour générer le premier signal et le deuxième signal, une unité de transmission (304) connectée à l'unité de génération de signal (302) pour générer une porteuse portant le premier signal et le deuxième signal, et au moins deux éléments d'antenne (228, 230) connectés de façon opérationnelle à l'unité de transmission (304) pour transmettre la porteuse portant le premier signal et le deuxième signal, et dans laquelle les moyens d'application comprennent un générateur de bond d'antenne (306) connecté de façon opérationnelle à l'unité de transmission pour appliquer au moins deux bonds d'antenne sur la porteuse de sorte que l'au moins une partie du premier signal et l'au moins une partie du deuxième signal soient transmises au cours d'un intervalle entre deux bonds d'antenne consécutifs entre au moins deux éléments d'antenne.

14. Station d'émission-réception de base selon la revendication 13, dans laquelle l'unité de génération de signal (302) est configurée pour générer le premier signal, dont au moins une partie est soumise à une mesure de puissance pour régler un gain de réception de la station mobile pour la réception de l'au moins une partie du deuxième signal.

15. Station d'émission-réception de base selon la revendication 13, dans laquelle le générateur de bond d'antenne (306) est configuré pour synchroniser un bond d'antenne dans une transmission de porteuse par rapport à une transition de signal du premier signal au deuxième signal de sorte qu'il y ait un espace temporel prédéterminé entre la transition de signal et le bond d'antenne entre les au moins deux éléments d' antenne ; et
dans laquelle le générateur de bond d'antenne (306) est configuré pour exécuter le bond d'antenne sur la base de la synchronisation du bond d'antenne.

16. Station d'émission-réception de base selon la revendication 13, dans laquelle l'unité de transmission (304) est configurée pour générer la porteuse portant le premier signal et le deuxième signal consécutivement.

17. Station d'émission-réception de base selon la revendication 13, comprenant en outre :
un appareil de commande de bond d'antenne (310) connecté au générateur de bond d'antenne (304), l'appareil de commande de bond d'antenne (310) étant configuré pour fournir une séquence prédéterminée de bonds d'antenne comprenant un intervalle de bond d'antenne entre deux bonds d'antenne consécutifs, la séquence de bonds d'antenne définissant au moins un des éléments suivants : une pondération d'antenne appliquée sur les au moins deux éléments d'antenne au cours de l'intervalle de bond d'antenne, et une synchronisation des bonds d'antennes ; et
dans laquelle le générateur de bond d'antenne (306) est configuré pour appliquer les au moins deux bonds d'antenne sur la porteuse selon la séquence de bonds d'antenne.

18. Station d'émission-réception de base selon la revendication 17, dans laquelle l'appareil de commande de bond d'antenne (310) est configuré pour fournir une séquence de bonds d'antenne qui maximise une dé-corrélation d'au moins un canal porté par la porteuse au sein d'au moins une période d'entrelacement.

19. Station d'émission-réception de base selon la revendication 17, dans laquelle l'appareil de commande de bond d'antenne (310) est configuré pour fournir une séquence de bonds d'antenne optimisée sur la base d'au moins un critère sélectionné parmi un groupe comprenant :
un effet de la séquence de bonds d'antenne sur des performances d'un canal de trafic porté par la porteuse ;
un effet de la séquence de bonds d'antenne sur des performances d'un canal de contrôle commun porté par la porteuse ;
un effet de la séquence de bonds d'antenne sur des performances d'un canal de diffusion porté par la porteuse ;
un effet de la séquence de bonds d'antenne sur des performances d'un canal de contrôle dédié porté par la porteuse ;
un effet de la séquence de bonds d'antenne sur une capacité d'un système de télécommunication cellulaire ; et
des informations en retour à partir de la station mobile.

20. Station d'émission-réception de base selon la revendication 13, dans laquelle l'unité de génération de signal (302) est configurée pour générer le deuxième signal transférant un canal sélectionné parmi un groupe comprenant au moins un parmi :
un canal de diffusion ; et
un canal de contrôle commun.

21. Station d'émission-réception de base selon la revendication 13, dans laquelle l'unité de génération de signal (302) est configurée pour générer un troisième signal transférant un canal sélectionné parmi un groupe comprenant au moins un parmi :
un canal de trafic, un canal de contrôle dédié ; et dans laquelle
l'unité de transmission (304) est configurée pour générer la porteuse portant le troisième signal.

22. Station d'émission-réception de base selon la revendication 13, dans laquelle l'unité de transmission (304) est configurée pour générer une pluralité de porteuses ; et
dans laquelle l'unité de transmission (304) est configurée pour appliquer un bond de fréquence sur une transmission de la station de base en utilisant la porteuse.

23. Station d'émission-réception de base selon la revendication 13, dans laquelle l'unité de génération de signal (302) est configurée pour générer le premier signal comprenant un premier intervalle de temps et le deuxième signal comprenant un second intervalle de temps, au moins une partie du premier intervalle de temps étant soumise à une mesure pour régler les caractéristiques de réception de la station mobile pour la réception d'au moins une partie du second intervalle de temps ; et
dans laquelle le générateur de bond d'antenne (306) est configuré pour appliquer un bond d'antenne sur la porteuse de sorte que l'au moins une partie du premier intervalle de temps et l'au moins une partie du second intervalle de temps soient transmises au cours d'un intervalle entre les deux bonds d'antenne consécutifs.
